# EUROPEAN PATENT APPLICATION

(11) **EP 4 779 513 A1**
(43) Date of publication of application: **22.07.2026**
(21) Application number: 26152321.1
(22) Date of filing: 16.01.2026
(51) Int. Cl.: G06F 40/30

(54) **AUTOMATED AND COMPUTATIONALLY EFFICIENT CONTENT ANALYSIS OF TEXT**

(30) Priority: 21.01.2025 US 202519033367
(71) Applicant: Rakuten Group, Inc., Setagaya-ku Tokyo 158-0094 (JP)
(72) Inventor: LI, Michael, Tokyo, 158-0094 (JP); SANGHVI, Shaurya, Tokyo, 158-0094 (JP); ROSENBERGER, Michael, Tokyo, 158-0094 (JP); CARSON, Joanna, Tokyo, 158-0094 (JP)
(74) Representative: EIP

(57) **Abstract**

The present disclosure relates to method and system for automated, computationally efficient content analysis of text-based media, such as books or video transcripts. The system receives input text, partitions it, and performs keyword-based searches on the partitions to score them. High-scoring partitions are selected for AI analysis, resulting in a content rating or warning. The system significantly reduces the computational cost and time associated with large-scale content analysis while maintaining high accuracy and recall across multiple categories.

## Description

### BACKGROUND OF THE INVENTION

### 1. FIELD OF THE INVENTION

This invention relates generally to automated content analysis of text, and, more specifically, to using an AI model to generate a content analysis output for the text while minimizing computational cost and time.

### 2. DESCRIPTION OF THE BACKGROUND ART

Online content providers, such as book sellers or video streaming services, often offer content ratings to assist consumers in selecting appropriate media. Content ratings typically cover categories like violence, sexual content, and mature language, helping users avoid unwanted material and enabling parents to make informed choices for young readers or viewers. Traditionally, the process of content rating has been labor intensive, requiring human reviewers to read or watch the content and assign ratings based on manual evaluation. With the advent of large language models (LLMs), this process can now be automated. Books and transcripts of video can be fed to an LLM for analysis. However, applying LLMs to large-scale media collections, such as millions of books or hours of video transcripts, can be prohibitively expensive. For example, even moderate per-item costs for token processing quickly accumulate to unsustainable levels when millions of books need to be rated. Therefore, there is a need for a more computationally efficient and cost-effective solution for automatically generating content ratings for large libraries of media.

### SUMMARY OF THE DISCLOSURE

The solution set forth in the present disclosure addresses the aforementioned inefficiencies by providing a method for automated and computationally efficient content analysis of text. The method involves receiving input text, partitioning it into smaller sections, and applying keyword-based searches to identify relevant content. Based on the keyword search results, the system reduces the input text to a smaller subset of partitions that are more likely to contain content requiring review.

An AI model is then prompted to analyze the reduced text and provide a content analysis output, which may include content ratings and warnings across various categories such as violence, sexual content, and mature language. The system records the content analysis output for the reduced text as content analysis for the input text. By reducing the input text to only the most relevant portions, the method significantly reduces the cost and time required for content analysis, while maintaining accuracy and recall.

### BRIEF DESCRIPTION OF THE DRAWINGS

Figures **1A-1B** are flowcharts that illustrate a method for automated and computationally efficient content analysis of text.
Figure 2 is a block diagram that illustrates an example architecture for a system for automated and computationally efficient content analysis of text.
Figures **3A-3B** are flowcharts that illustrate an example implementation in which multiple content ratings are generated for a book.
Figure 4 illustrates an example of content ratings and content warning.

### DETAILED DESCRIPTION OF THE PREFERRED EMBODIMENTS

The present disclosure relates to a method, computer program, and system for performing automated and computationally efficient analysis of text-based media using AI models. The method intelligently reduces the amount of text processed by the AI model, thereby optimizing the cost required for content analysis, while maintaining high accuracy in the content analysis. The term "system" as used herein refers to the computer system that performs the method described herein.

Examples of content analysis include providing content ratings and content warnings for books, movies, and shows. For example, a book or movie could be evaluated for violence, sexual content, or mature language to help users avoid unwanted material and to enable parents to make informed choices for their children

### 1. Method and System for Automated and Computationally Efficient Content Analysis of Text

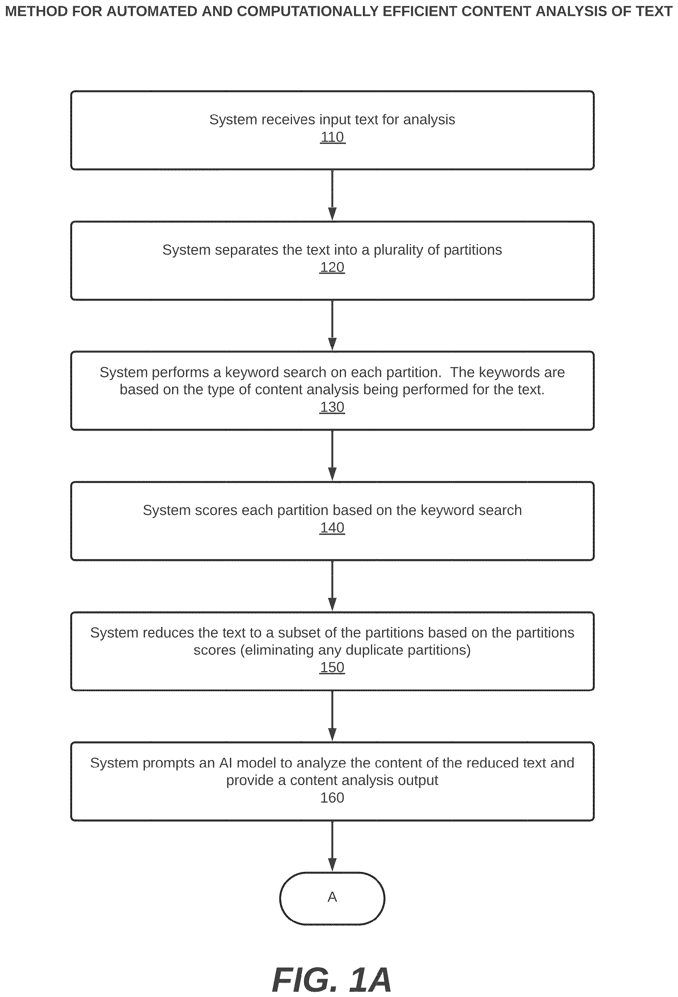

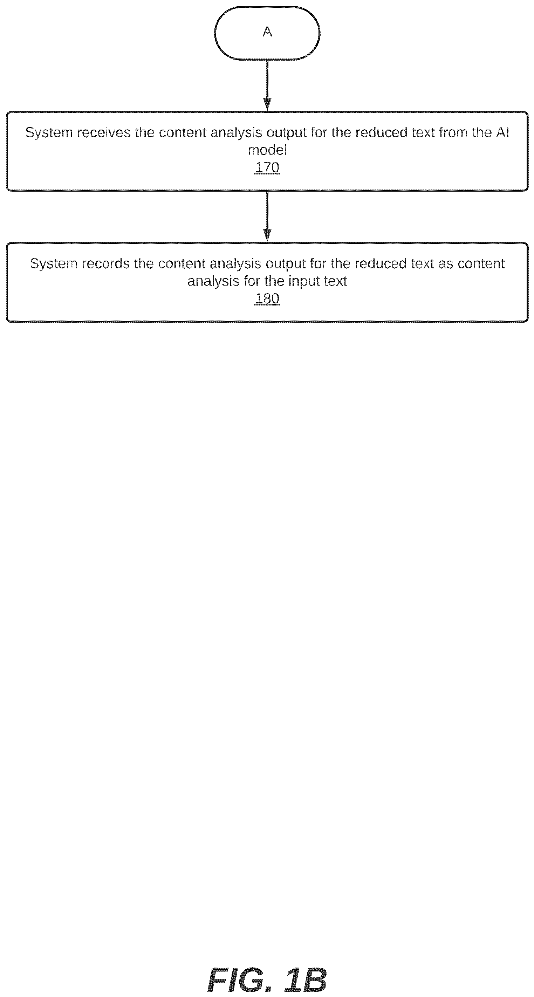

Figures **1A-1B** illustrate a method for automated and computationally efficient content analysis of text. The process begins with the system receiving input text for analysis (step **110**). The input text could be a book, a video/movie transcript, or other text-based media. Videos can be analyzed using this method by transcribing the video into text. After receiving the input text, the system separates the text into multiple partitions (step **120**).

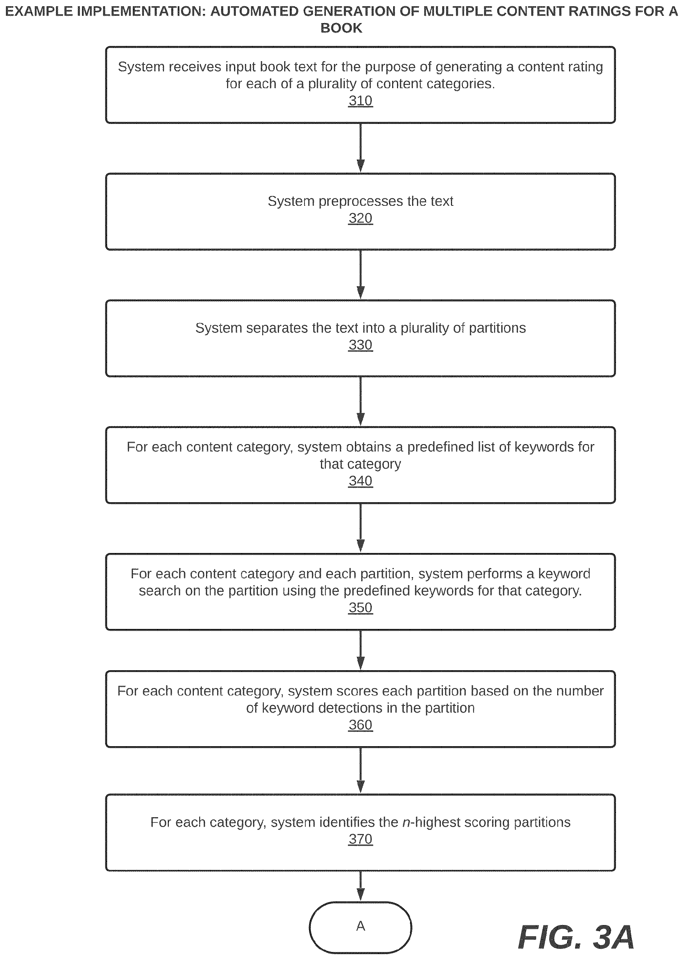

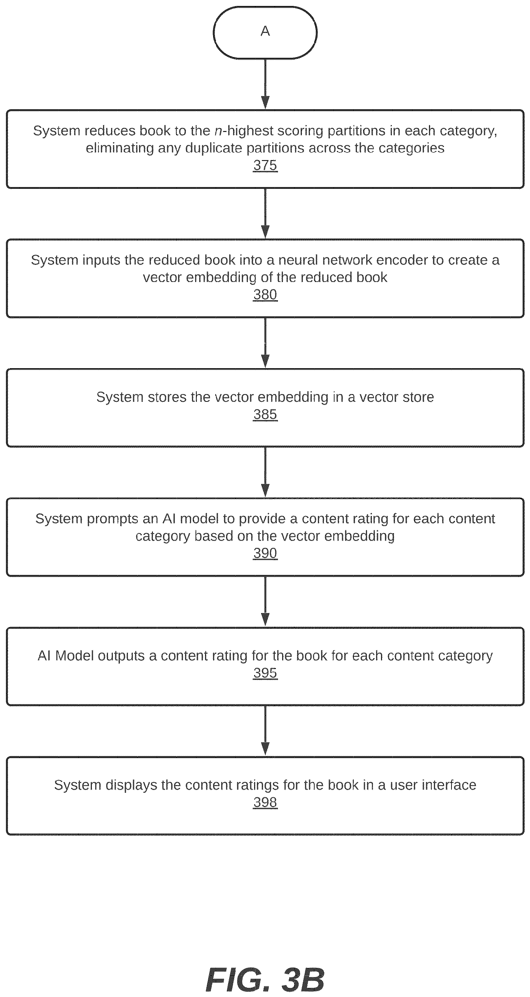

The system then performs a keyword search on each partition (**130**). The keywords used in these searches are based on the specific content analysis being performed for the text. For example, if the input text is being evaluated for violence, the keywords are words that are often associated with violence (*e.g*., gun, knife, shoot, shot, kick, punch, etc.). There may be keywords for each of a plurality of languages to accommodate books in different languages. Each partition is scored based on the results of the keyword search (**140**), with partitions containing a higher number of keyword matches receiving higher scores. As described with respect to Figures **3A-3B****,** there may be multiple, distinct keyword lists, and the partitions are searched and scored with respect to each keyword list.

The system reduces the text to a subset of the partitions based on the partition scores (step **150**). This reduces the input text to those sections most relevant to the type of content analysis being performed, significantly decreasing the overall volume of text that the AI model needs to process. In embodiments where partitions are searched and scored for a plurality of keyword lists, the same partition may score high for multiple keyword lists. In such embodiments, step **150** includes eliminating any duplicate high-scoring partitions in the reduced subset.

Once the text is reduced, the system prompts an AI model to analyze the reduced text and provide a content analysis output (step **160**). This analysis may involve generating content ratings, content warnings, or other content analysis based on the type of content detected. As examples, content ratings and/or warnings may correspond to (1) genre of the input text (*e.g.,* "Fantasy: 5/5," "Mystery: 3/5," etc.), (2) age ranges (*e.g.,* "suitability for ages 8-12: 3/5", (3) reading level ("suitability for beginner reader: 5/5"), and/or (4) potentially sensitive content (*e.g*., sexual, violent, or mature language content).

In one embodiment, the prompt to the AI specifies the following:
- Metrics on which input text will be evaluated (*e.g*., the amount of sexual content, violent content, and mature content in the input text)
- A ratings scale (*e.g.,* 1-4)
- Instructions and examples for the ratings scale (*e.g.,* "A rating of 1 for sexual content may still include mild content, such as kissing and a romantic interest.")
- Instructions on the desired output (*e.g*., "please provide the rating as a JSON object" and the format for the desired output (*e.g*., "mature_language_rating: value, mature_language_rating_explanation")
- Instructions to provide an explanation of the rating, such as instructions to provide excerpts from the input text.

The system receives the content analysis output from the AI model (step **170**) and records the content analysis output for the reduced text as content analysis for the input text (step **180**). In certain embodiments, the content analysis output is displayed in a user interface.

### 2. Example Architecture

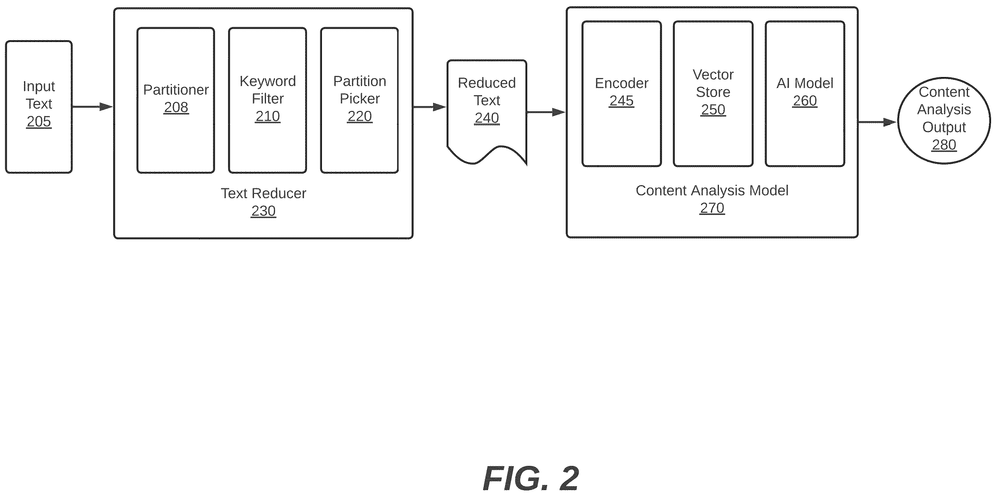

Figure **2** illustrates an example software architecture of the system. The input text (**205**) is received at a Text Reducer module (**230**), which includes a Partitioner (**208**), a Keyword Filter (**210**), and a Partition Picker (**220**). The Partitioner divides the input text into partitions. The Keyword Filter performs keyword-based searches on the input text and scores the partitions based on keyword matches. The Partition Picker selects those partitions that are the most relevant to the content analysis based on the partition scores, eliminating any duplicate partitions that score well across multiple content categories. The output of the Text Reducer is reduced text (**240**) made up of a subset of the partitions of the input text. The Text Reducer ensures that only the most relevant portions of the input text are passed along for additional processing by the AI model (**260**), helping to streamline the overall system performance.

The reduced text (**240**) is received by a Content Analysis Module (**270**), which generates a content analysis output (**280**) for the input text based on the reduced text. In certain embodiments, the system architecture includes an Encoder (**245**) and a Vector Store (**250**). The Encoder is a neural network encoder that creates a vector embedding of the reduced text, which is a compressed numerical representation of the reduced text. The vector embedding is stored in the Vector Store (**250**), where it can be accessed by the AI Model (**260**). The AI Model is the component responsible for conducting the final analysis of the reduced text or vector embedding. Storing a vector embedding of the reduced text in the Vector Store enables the AI Model to efficiently select the most relevant text for content analysis, further reducing the number of tokens processed by the AI Model.

The AI Model is prompted to generate a Content Analysis Output (**280**), which may include content ratings, warnings, or other relevant metadata based on the content detected in the text. The output can be specific to categories such as violence, sexual content, and mature language, providing detailed insight into the analyzed media.

### 3. Example Implementation

Figures **3A-3B** illustrate an example implementation of the method of Figures **1A-1B****,** in which multiple content ratings are generated for a book. The system begins by receiving the input text of a book (step **310**) and preprocessing it (step **320**) to optimize the text for keyword searching. For example, the system may stem words to increase keyword match rates.

The text is divided into partitions (step **330**), and for each content category, such as each category for potentially sensitive material (*e.g*., violence, sexual content, and mature language) or each genre category *(e.g*., fiction, mystery, history, etc.), the system retrieves a predefined list of keywords (step **340**). For each content category, the system performs keyword searches on each partition (step **350**) and scores the partitions based on the number of keyword matches found in each partition (step **360**). If the book is being analyzed for *x* content categories, then each partition would have *x* scores, one for each content category.

For each content category, the system identifies the *n*-highest scoring partitions (*e.g.,* the 6-8 highest scoring partitions) (step **370**) and reduces the text to include only these top-scoring sections, while eliminating any duplicate partitions across content categories (step **375**). This ensures that the AI model processes only the most relevant text for each content category.

The system converts the reduced text into a vector embedding using a neural network encoder (step **380**). The embedding is stored in a vector store (step **385**) and used as input for the AI model. The system prompts the AI model to provide a content rating for each content category based on the vector embedding (step **390**). The AI model then generates a content rating for each category, such as violence, sexual content, or mature language (step **395**). Examples of other types of content ratings are genre ratings/classifications (*e.g.,* fiction, mystery, history, etc.), reading-level ratings/classifications (*e.g.,* 1^{st}-3^{rd} grade, 4^{th}-6^{th} grade, 7^{th}-9^{th} grade, etc.), or age-based ratings/classifications (*e.g.,* 5-7, 8-10, 11-13, etc.). The final content ratings are displayed to the user through a user interface (step **398**), providing a clear and concise summary of the book's content across the relevant categories. The terms x and *n* refer to positive integers.

### 4. Example Content Ratings and Content Warnings

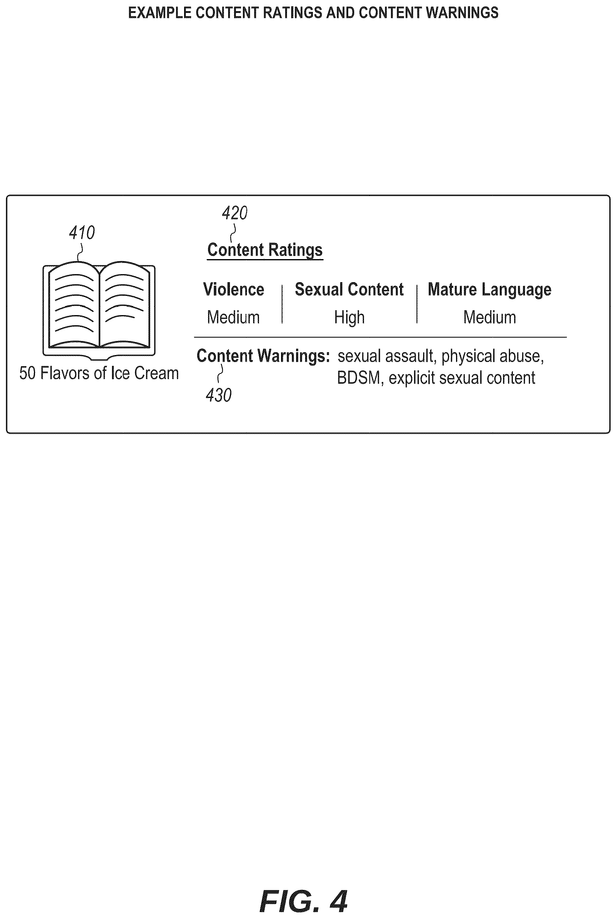

Figure **4** shows an example of the system's output, demonstrating how content ratings and warnings are displayed to users for a book. In this example, content ratings (**420**) are provided for a book titled "50 Flavors of Ice Cream" (**410**), detailing the levels of violence, sexual content, and mature language found in the text. Additionally, specific content warnings (**430**) are generated to alert the reader to potentially sensitive material. The user interface presents these ratings in a structured format, allowing consumers to quickly assess whether the media is appropriate for their preferences or for specific audiences, such as children.

### 5. General

The methods described herein are embodied in software and performed by a computer system (comprising one or more computing devices) executing the software. A person skilled in the art would understand that a computer system has one or more physical memory units, disks, or other physical, computer-readable storage media for storing software instructions, as well as one or more processors for executing the software instructions.

As will be understood by those familiar with the art, the invention may be embodied in other specific forms without departing from the spirit or essential characteristics thereof. Accordingly, the above disclosure is intended to be illustrative, but not limiting, of the scope of the invention.

## Claims

1. A method, performed by a computer system, for automated and computationally efficient content analysis of text, the method comprising:
receiving input text for analysis;
separating the text into a plurality of partitions;
performing a keyword search on each partition, wherein the keywords are based on the type of content analysis being performed for the text;
scoring each partition based on the results of the keyword search;
reducing the text to a subset of the partitions based on the partition scores;
prompting an AI model to analyze the content of the reduced text and provide a content analysis output;
receiving the content analysis output for the reduced text from the AI model; and
recording the content analysis output for the reduced text as content analysis for the input text.

2. The method of claim 1 wherein the input text is a book or video dialogue.

3. The method of claim 1, wherein the content analysis output includes a content rating for the input text; and
wherein, optionally, the content analysis output also includes a content warning for the input text.

4. The method of claim 3, wherein the AI model is prompted to provide a content rating for the input text for each of a plurality of content rating categories and, consequently, the content analysis output includes a content rating for each a plurality of content rating categories; and
wherein, optionally:
there is a set of keywords for each content rating category;
the keyword and scoring steps are performed for each content rating category;
the *n*-highest scoring partitions are identified for each category; and
the input text is reduced to the *n*-highest scoring partitions in each category, provided that any duplicate partitions across categories are eliminated.

5. The method of claim 1, wherein the content analysis output corresponds to one of the following: (1) genre of the input text, (2) age ranges, (3) reading level, or (4) sexual, violent, or mature language content.

6. The method of claim 1, wherein:
prior to prompting the AI model, the method further comprises applying a neural network encoder to the reduced text to obtain a vector embedding of the reduced text; and
the reduced text is provided to the AI model in the form of the vector embedding.

7. The method of claim 1, further comprising displaying the content analysis output in a user interface.

8. A computer system for automated and computationally efficient content analysis of text, the system comprising:
one or more processors;
one or more memory units coupled to the one or more processors, wherein the one or more memory units store instructions that, when executed by the one or more processors, cause the system to perform the operations of:
receiving input text for analysis;
separating the text into a plurality of partitions;
performing a keyword search on each partition, wherein the keywords are based on the type of content analysis being performed for the text;
scoring each partition based on the results of the keyword search;
reducing the text to a subset of the partitions based on the partition scores;
prompting an AI model to analyze the content of the reduced text and provide a content analysis output;
receiving the content analysis output for the reduced text from the AI model; and
recording the content analysis output for the reduced text as content analysis for the input text.

9. The computer system of claim 8, wherein the input text is a book or video dialogue.

10. The computer system of claim 8, wherein the content analysis output includes a content rating for the input text; and
wherein, optionally, the content analysis output also includes a content warning for the input text.

11. The computer system of claim 10, wherein the AI model is prompted to provide a content rating for the input text for each of a plurality of content rating categories and, consequently, the content analysis output includes a content rating for each a plurality of content rating categories; and
wherein, optionally:
there is a set of keywords for each content rating category;
the keyword and scoring steps are performed for each content rating category;
the *n*-highest scoring partitions are identified for each category; and
the input text is reduced to the n-highest scoring partitions in each category, provided that any duplicate partitions across categories are eliminated.

12. The computer system of claim 8, wherein the content analysis output corresponds to one of the following: (1) genre of the input text, (2) age ranges, (3) reading level, or (4) sexual, violent, or mature language content.

13. The computer system of claim 8, wherein:
prior to prompting the AI model, the method further comprises applying a neural network encoder to the reduced text to obtain a vector embedding of the reduced text; and
the reduced text is provided to the AI model in the form of the vector embedding.

14. The computer system of claim 8, further comprising displaying the content analysis output in a user interface.

15. A non-transitory computer-readable medium comprising a computer program, that, when executed by a computer system, enables the computer system to perform the following method for automated and computationally efficient content analysis of text, the method comprising:
receiving input text for analysis;
separating the text into a plurality of partitions;
performing a keyword search on each partition, wherein the keywords are based on the type of content analysis being performed for the text;
scoring each partition based on the results of the keyword search;
reducing the text to a subset of the partitions based on the partition scores;
prompting an AI model to analyze the content of the reduced text and provide a content analysis output;
receiving the content analysis output for the reduced text from the AI model; and
recording the content analysis output for the reduced text as content analysis for the input text; and
wherein, optionally, the content analysis output includes a content rating for the input text.
